# EUROPEAN PATENT APPLICATION

(11) **EP 2 106 185 A2**
(43) Date of publication of application: **30.09.2009**
(21) Application number: 09150199.9
(22) Date of filing: 08.01.2009
(51) Int. Cl.: H04W 56/00, H04W 72/12

(54) **Base station and scheduling method**

(30) Priority: 26.03.2008 JP 2008080877
(71) Applicant: Fujitsu Limited, Kawasaki-shi, Kanagawa 211-8588 (JP)
(72) Inventor: Sato, Naoto c/o FUJITSU LIMITED, Kawasaki-shi, Kanagawa 211-8588 (JP)
(74) Representative: Stebbing, Timothy Charles

(57) **Abstract**

A base station performing wireless communications with terminals includes: a scheduler (53) for scheduling data transmitted to the terminals; a desynchronization determining unit (524) acquiring synchronization information on synchronization between the base station and a neighboring base station and determining, based on the synchronization information acquired, whether desynchronization has occurred in the base station or not; and a changing unit (532) changing, when the desynchronization determining unit (524) determines that the desynchronization has occurred in the base station, the scheduling by the scheduler (53) so as to prevent radio waves transmitted from the base station and radio waves transmitted from the neighboring base station from interfering with each other. The base station may be employed in an OFDM-or OFDMA-based wireless communication system with or without FFR.

## Description

This case relates to a technology for a wireless communication system.

Known communication schemes used in wireless communications include Orthogonal Frequency Division Multiplexing (OFDM) and an Orthogonal Frequency Division Multiple Access (OFDMA). OFDM involves dividing transmission data into plural pieces of data, mapping the divided pieces of transmission data to a plurality of orthogonal carriers (subcarriers), and transmitting the data in parallel on a frequency axis.

In OFDMA the subcarriers are organized into subsets and logically into subchannels. Wireless resources can be allocated to a user on a subchannel-by-subchannel basis.

Patent document 1 describes a technology related to a scheduling unit which controls a transmitter or a receiver. Patent document 1 discloses a scheme that interference between the base stations is reduced by time-synchronizing the scheduling units of several base stations. Further, Patent document 1 discloses another scheme of giving a time reference to the scheduling units and preventing the base stations providing services in the same cell from simultaneously using the same resource by checking a state of loads on the base stations providing the services in the same cell.
[Patent document 1] Japanese Patent Laid-Open Publication No.2007-74718

Wireless communication systems often require synchronizing all of the base stations. However, some of the base stations may be unable always to perform synchronization, depending on factors such as installation environments of the base stations and the weather.

In such a case, phases of radio frames transmitted from the respective base stations are shifted, and such a problem might arise that radio waves from the individual base stations interfere with each other.

In this case, a scheme for solving the problems given above is that if the desynchronization occurs in the base station, scheduling of the data transmitted to a predetermined terminal from the base station is changed for preventing the base stations from interfering with each other due to the desynchronization.

Specifically, according to a first mode or aspect of the present invention, a base station(apparatus) performing wireless communications with terminals, comprises: a scheduler configured to schedule data transmitted to the terminal; a desynchronization determining unit configured to acquire synchronization information on synchronization between the base station and a neighboring base station to the base station and determining, based on the synchronization information acquired, whether the desynchronization occurs in the base station or not; and a changing unit configured to change, when the desynchronization determining unit determines that the desynchronization occurs in the base station, the scheduling by the scheduler so as to restrain radio waves transmitted from the base station and radio waves transmitted from the neighboring base station from interfering with each other.

According to the first mode, the desynchronization determining unit determines whether desynchronization has occurred in the base station or not. The changing unit changes, based on a result of the determination by the desynchronization determining unit, the scheduling by the scheduler. Namely, the data allocation conducted by the scheduler is changed to restrain the interference caused by the desynchronization. As a result, according to the first mode, even when the mutual synchronization between the base stations is lost, it is feasible to prevent radio waves from the neighboring base stations from interfering with each other.

Herein, according to the first mode, the base station may further comprise a reception level determining unit configured to acquire radio wave information with respect to a state of radio waves of the wireless communications, and to determine, based on the radio wave information acquired, a reception level of the terminal, wherein a subframe for transmitting data to the terminal may be divided, on a time base, into a segmented zone as a segmented region and an all-subchannel zone as a data region using all subchannels without being segmented, the scheduler may allocate data on the subframe on the basis of a result of the determination by the reception level determining unit, and the changing unit may, when the desynchronization determining unit determines that desynchronization has occurred in the base station, allocate a region having no data for at least one slot in anteriority to (following) the all-subchannel zone.

The data can be allocated corresponding to the reception level by providing the reception level determining unit. Further, the changing unit, when the desynchronization determining unit determines that the desynchronization occurs, allocates the data non-allocation region for 1 slot in the anteriority to the all-subchannel zone. With this scheme, even if a deviation occurs due to the desynchronization between the subframe structuring the data transmitted from the base station and the subframe structuring the data transmitted from the neighboring base station, this deviation can be allowed (accommodated) by the 1-slot region. Note that a data region (which is also called a data burst) allocated to the subframe is configured by joining the slots. Moreover, the base station in the first mode can be preferably used as the base station in the wireless communication system that involves employing an Orthogonal Frequency Division Multiplexing (OFDM) system and an Orthogonal Frequency Division Multiplexing Access (OFDMA) system. Then, a slot unit is a minimum data unit in the OFDM system and the OFDMA system.

Herein, in the first mode, the scheduler may allocate the data transmitted to the terminal to the all-subchannel zone if the reception level of the terminal is equal to or larger than a predetermined threshold value, and may allocate the data transmitted to the terminal to the segmented zone if the reception level of the terminal is smaller than the predetermined threshold value.

The data allocation described above is preferably utilized by the base station in the wireless communication system that involves using, e.g., the OFDM system and the OFDMA system. Then, the same effect as by the conventional arts using different frequencies can be obtained though the same frequency is employed in a way that performs this type of data allocation. Note that the predetermined threshold value can be empirically set beforehand as a value from which the terminal can be distinguished from the terminal that is prone to interference from neighboring cells.

Herein, in the first mode (aspect of the present invention), a subframe for transmitting data to the terminal may have a common data region for transmitting common data to the terminal and to another terminal different from the terminal, and the changing unit, when the desynchronization determining unit determines that the desynchronization occurs in the base station, may reduce transmission power of the common data region in a subframe for transmitting data from the base station in the desynchronization.

With this scheme, it is possible to adjust the transmission power of the common data region on the subframes structuring the data transmitted from the base station on the basis of the result of the determination by the desynchronization determining unit. Namely, when the desynchronization determining unit determines that desynchronization has occurred, the changing unit reduces the transmission power of the common data region on the subframe of the base station in the desynchronization. As a result, it is feasible to restrain the data allocated to the common data regions from interfering with each other if the desynchronization is caused.

Incidentally, in the first mode, the changing unit, when the desynchronization determining unit determines that the desynchronization occurs in the base station, may reduce transmission power of the common data region in a subframe for transmitting data from the base station in the desynchronization, corresponding to the reception level determined by the reception level determining unit. This scheme can more surely prevent the data from interfering with each other.

It should be noted that other aspects of the present invention include a wireless communication system including the base station described above and the terminal performing the wireless communications with the base station. This case in still another mode may be a scheduling method for making a computer, an IC chip, etc realize any one of the functions described above, or may be a program for getting any one of the functions realized. This case in yet another mode may also be a readable-by-computer recording medium recorded with this program. According to the modes disclosed, it is feasible to provide the wireless communication related technology of restraining the mutual interference of the radio waves transmitted from respective base stations even if the base stations mutually get desynchronized.

Reference is made, by way of example only, to the accompanying drawings in which:
FIG.1 is a diagram illustrating an outline of an architecture of a wireless communication system in an embodiment and one example of a state of allocating neighboring cells.
FIG.2 is a diagram illustrating a structure of a downlink subframe in the case of employing an FFR technique.
FIG.3 is a diagram illustrating a structure of the frame including an uplink subframe.
FIG.4 is a flowchart illustrating a data application flow corresponding to the FFR technique.
FIG.5 is an explanatory diagram illustrating a CP (Cyclic Prefix).
FIG.6 is a diagram illustrating a downlink subframe to which the CP is allocated.
FIG.7 is a diagram illustrating a cell in a state where an arbitrary base station gets desynchronized.
FIG.8 is a diagram illustrating the downlink subframe in the state where the arbitrary base station gets desynchronized.
FIG.9 is a diagram illustrating an outline of a configuration of the base station in a first embodiment.
FIG.10 is a diagram illustrating a structure of the downlink subframe provided with a data non-allocation region.
FIG.11 is a flowchart illustrating a flow of a data allocation process.
FIG.12 is a diagram illustrating an outline of a configuration of the base station in a second embodiment.
FIG.13 is a diagram showing a structure of the downlink subframe in which an MBS region is allocated.
FIG.14 is a flowchart illustrating a flow of the data allocation process in the wireless communication system in the second embodiment.

A wireless communication system in an embodiment is configured to prevent radio waves transmitted from respective base stations from interfering with each other even if synchronization between the base stations is lost. In the wireless communication system according to the embodiment, which will hereinafter be described, a scheduler within the base station, when detecting desynchronization with regard to a time reference such as one provided by the GPS (Global Positioning System), provides a region to which no data is allocated between a segmented zone and a non-segmented zone (all subchannel zone), thereby actualizing the prevention of the interference. Note that the wireless communication system in the following discussion can preferably be utilized for wireless communications using the OFDM (Orthogonal Frequency Division Multiplexing) system and the OFDMA (Orthogonal Frequency Division Multiple Access) system. Such being the case, the discussion first deals with the background arts such as the OFDM system and the OFDMA system while inclusively taking problems inherent in the background arts, and then deals with details of the wireless communication system according to the embodiment.

OFDM is a system in which the transmission data is divided into plural pieces of data, the divided pieces of transmission data are mapped to a plurality of orthogonal carrier waves (subcarriers), and the subcarriers are transmitted in parallel on a frequency axis. OFDM is adopted in the standards of IEEE802.16-2004 for WiMAX (Worldwide Interoperability for Microwave Access) and realizes high-speed data communications based on high utilization efficiency of the frequency.

OFDMA differs from OFDM in that the subcarriers are organized into subsets and logically into subchannels. Wireless resources can be allocated on a subchannel by subchannel basis to users. The OFDMA system is employed in so-called mobile WiMAX and is adopted in the standards of IEEE802.16e with respect to a broadband system.

The wireless communication technology using OFDM or OFDMA can involve further using an FFR (Fractional Frequency Reuse) technique. The FFR (Fractional Frequency Reuse) technique is, though using the same frequency in a plurality of cells, a technique of dividing the allocation of wireless resources between a segmented zone (Segmented Zone) and a non-segmented zone (All-Subchannel Zone) on one wireless frame. To be specific, the wireless resources in the segmented zone are allocated to terminals located at a cell edge that are liable to undergo the interference from the neighboring cells. The wireless resources in the all-subchannel zone are allocated to terminals located in the vicinity of the center of the cell which areunlikely to suffer interference from other cells.

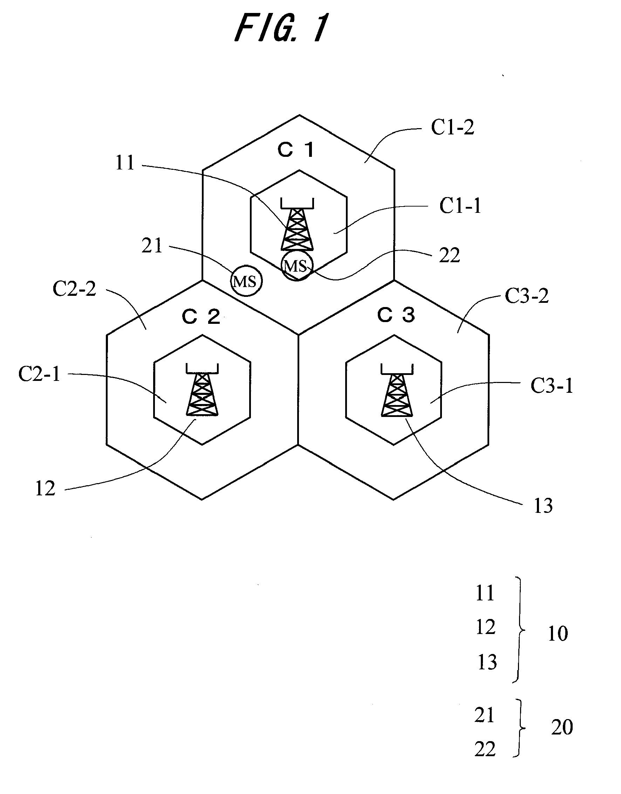

Herein, FIG. 1 illustrates an outline of an architecture of a wireless communication system in an embodiment and also one example of an allocation state of the neighboring cells. The wireless communication system illustrated in FIG. 1 comprises base stations (which will hereinafter be simply referred to as the base stations) 10 and terminal equipment (which will hereinafter be simply referred to as the terminals) 20.

Base stations 10 (11, 12, 13) are connected via a predetermined network (not shown). The base stations, for their representations, will hereinafter be generically referred to as base stations 10 except a case of having a necessity for distinguishing between the respective base stations. The base stations 10 individually configure notionally hexagonal cells C1, C2, C3. Each of the cells C1, C2, C3 includes a zone (e.g., C1-1 in the case of the cell C1) located at a center of the cell and undergoing no interference from a neighboring cell, and a zone (e.g., C1-2 in the case of C1) prone to interference from a neighboring cell. The base station 10 connects a terminal 20 to a wireless communication system and provides a predetermined communication service to the connected terminal 20 through wireless communications. Note that the terminals, for their representations, will hereinafter be generically referred to as the terminals 20 except when individual terminals need to be distinguished.

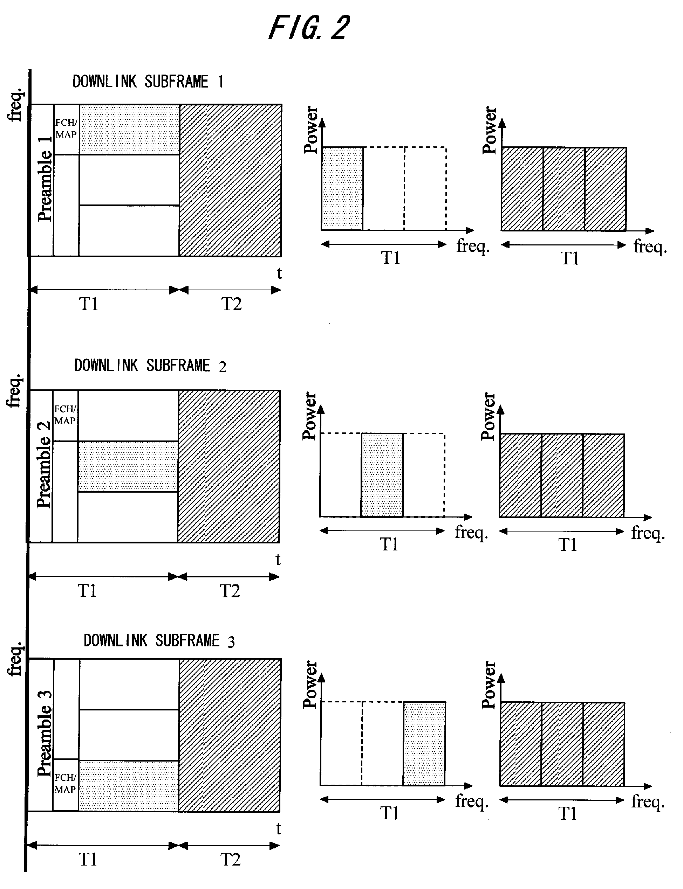

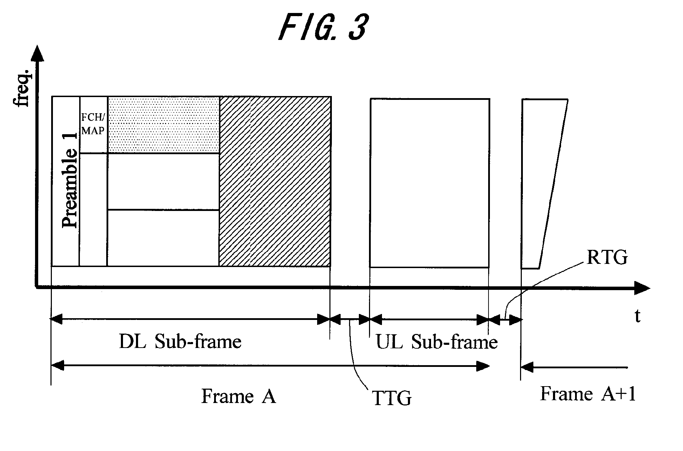

FIG. 2 illustrates a structure of a downlink subframe in the case of employing the FFR technique. A downlink subframe 1 corresponds to the cell C1 of the base station 11. A downlink subframe 2 corresponds to the cell C12 of the base station 12. A downlink subframe 3 corresponds to the cell C3 of the base station 13. The downlink subframes 1, 2, 3 are the downlink subframes (which are the frames transmitted toward the terminal 20 from the base station 10) on the same frequency. Incidentally, FIG. 2 illustrates only the downlink subframes, however, the frame structuring the data to be transmitted from the base station 10 contains an uplink subframe (which is the frame transmitted toward the base station 10 from the terminals 20), a TTG (Tx/Rx Transition Gap) and a RTG (Rx/Tx Transition Gap) for switching transmit/receive regions. FIG. 3 illustrates one example of the frame structure containing the uplink subframe etc.

As illustrated in FIG. 2, each of the downlink subframes 1, 2, 3 is divided into a segmented zone (Segmented zone) T1 and an all-subchannel (All Subchannel) zone T2 which is a non-segmented zone but uses all subchannels on a time base. Note that in the downlink subframes 1, 2, 3 illustrated in FIG. 2, a cell design employing the FFR technique is realized based on a Frequency Reuse Configuration (FRC) = 1.

The segmented zone T1 comprises a preamble (Preamble) field, an FCH (Frame Control Header: frame control header)/MAP (Mapping message: mapping message) field and a data allocation field. The Preamble field is used for the terminal 20 to establish synchronization with the network at an initial stage of the communications and for the purpose of measuring a quality of the signal transmitted from the base station 10. The FCH (Frame Control Header) contains report information for reporting a modulation system, a coding system, etc in the MAP field to the terminal so that the data is transmitted in a predetermined format and control information such as a subsequent piece of MAP information is correctly read. The MAP information contains information represents a location (a frequency and a time slot) of user data. A data sorting field is allocated to any terminal likely to suffer interference from other cells located at cell edges. The all-subchannel zone T2 subsequent to the segmented zone T1 is the non-segmented zone and allocated to the terminal that is located in the vicinity of the center of the cell and thus unlikely to experience interference from other cells. To be specific, the all-subchannel zone is allocated to the terminal 22 located at the center of the cell and existing in the region (e.g., C1-1) undergoing no interference from the neighboring cells.

Note that the heads of the downlink subframes 1, 2, 3 are aligned in the embodiment, however, this alignment implies that the respective base stations 11, 12, 13 are synchronized with each other.

Moreover, the illustrations on the right side in FIG. 2 correspond to the downlink subframes 1, 2, 3, and each illustrate a relationship between a transmission output and a frequency. As illustrated in FIG. 2, in the segmented zone T1, the transmission data are allocated so as not to cause interference between the neighboring cells. On the other hand, in the all-subchannel zone T2, the transmission data to the base stations 10 are allocated to all subchannels. Incidentally, sufficient distances between the base stations 10 are ensured with a small possibility of interference, and hence all of transmission outputs are set at the same output level.

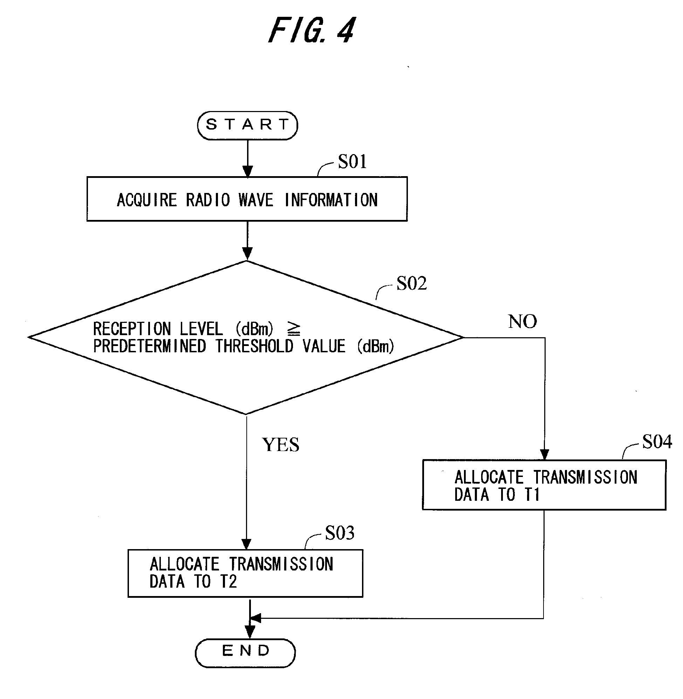

Next, a data allocation flow corresponding to the FFR will be described. FIG. 4 illustrates a data allocation flow corresponding to the FFR. In step S01, downlink radio wave information on a state of radio waves when the downlink data is transmitted to the terminal 20, is acquired. Subsequently in step S02, a reception level of the terminal 20 is determined based on the downlink radio wave information. Namely, the control unit in the base station acquires CINR information contained in the downlink radio wave information, and determines the reception level of the terminal 20. To be specific, the control unit determines whether or not the reception level (dBm) of the terminal 20 is higher than a preset threshold value (dBm). If the reception level is equal to or larger than the threshold value, the operation proceeds to step S03. Whereas if the reception level is smaller than the threshold value, the operation proceeds to step S04.

In step S03, the terminal 20 is determined to free of interference from any neighboring cells, and its transmission data is allocated to the all-subchannel zone T2. For example, the reception level of the predetermined terminal 20 is equal to or larger than the threshold value, and hence the control unit determines that the predetermined terminal 20 is interference-free, e.g. due to being located at the center of the cell, and allocates the transmission data transmitted to this terminal 20 to the all-subchannel zone T2.

On the other hand, in step S04, the terminal 20 is determined to be the terminal prone to interference from neighboring cells, and its transmission data is allocated to the segmented zone T1. For example, the reception level of the predetermined terminal 21 is smaller than the threshold value, and therefore the control unit determines that the predetermined terminal 21 is prone to interference. e.g. by being located in the vicinity of the cell edge, and allocates the transmission data transmitted to this terminal 21 to the segmented zone T1.

Next, the interference, which might be caused due to the FFR technique described above, will be explained. The FFR technique involves using the same frequency bands in adjacent cells, but can yield the same effects as by the conventional technique using different frequencies. Thus, the FFR entails the synchronization among all of the base stations 10 and typically involves providing a GPS (Global Positioning System) receiver as a timing reference in all of the base stations 10. It might, however, happen that some of the base stations 10 are disabled from receiving the GPS signal for a fixed period of time depending on elements such as installation environments of the base stations 10 and the weather. In such a case, clock oscillators mounted in the base stations 10 take over the task of time-keeping for maintaining synchronization. If the reception-disabled status of the GPS signal continuously occurs, however, the precise synchronization can not be realized. Further, if the reception-disabled status of the GPS signal continues for several tens of minutes or longer, the precise synchronization can not be actualized even if the accuracy of the clock oscillator is high. Then, if the precise synchronization is not realized, such problems might arise as to cause a phase shift between the subframes structuring the transmission data sent from the base stations 10 and the signals sent from the individual base stations interfere with each other.

Especially, precise synchronization among all of the base stations 10 is a prerequisite for FFR. For example, a definition according to the standards of IEEE802.16e is that the base station 10 synchronizes at a level of 1/8 cyclic prefix (CP: Cyclic Prefix).

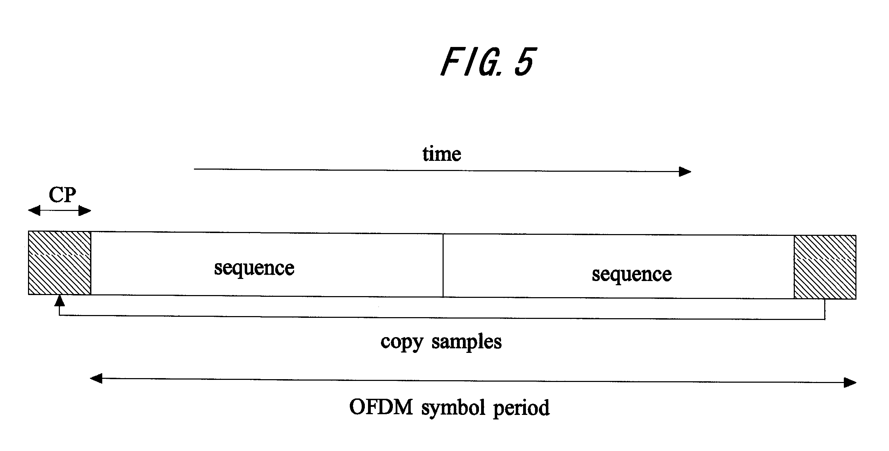

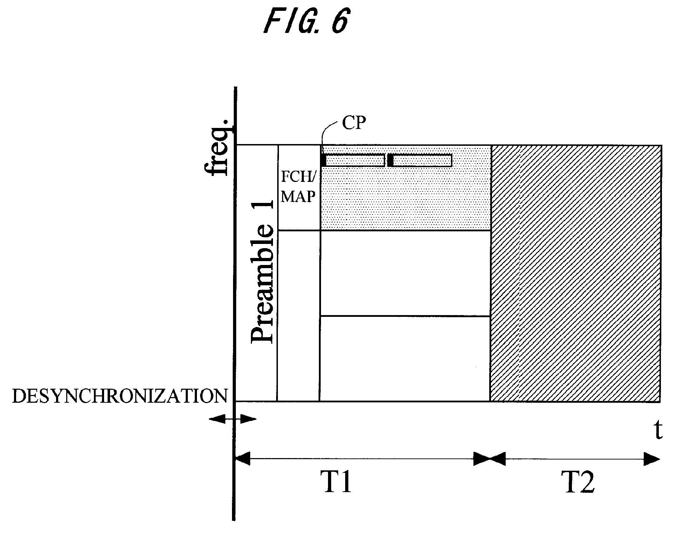

Herein, FIG. 5 is an explanatory diagram of the CP (Cyclic Prefix). FIG. 6 illustrates the downlink subframe attached with the CP. The CP provides a guard interval (GI) and is attached to a head of a block signal in order to reduce influence of intersymbol interference due to multiplexed waves. IEEE802.16e provides a definition that the base station 10 synchronizes at the level of 1/8 CP. Accordingly, supposing that a phase of the radio frame from each of the base stations 10 exceeds 1/8 CP, such a situation might happen that the signals from the base stations 10 interfere with each other.

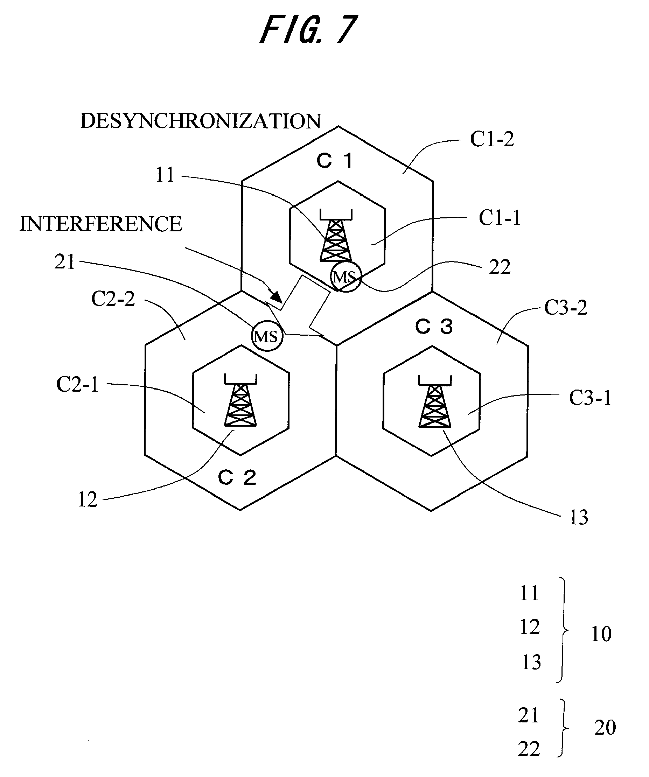

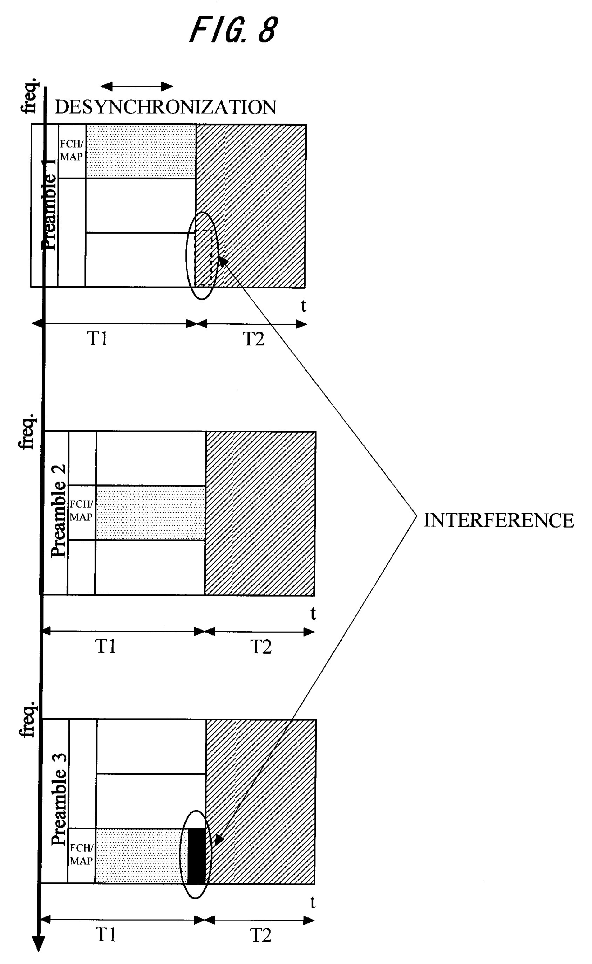

FIG. 7 illustrates the cell in a state where the base station 11 gets desynchronized. Further, FIG. 8 illustrates the downlink subframe in the state where the base station 11 gets desynchronized. For example, in the case where the base station 11 gets desynchronized, if a phase difference exceeds the 1/8 CP (Cyclic Prefix), the transmission data allocated to the all-subchannel zone T2 of the cell C1 overlaps with data of the neighboring cell C2. As a result, it follows that the signals received by the terminal 21 receiving the data at the cell edge of the cell C2 interfere with each other. Namely, the desynchronization occurs in the base station 11, with the result that a deviation is produced between the head position of the downlink subframe of the cell C1 and the head positions of the downlink subframes of the cells C2, C3. As a consequence, take FIGS. 7 and 8 for example, the data in the all-subchannel zone T2 of the cell C1 interfere with the data in the segmented zone T1 of the cell C2.

Embodiments of the present invention are configured to prevent, even if the base stations 10 get desynchronized as described above, the signals (radio waves) transmitted from the base stations 10 from interfering with each other. In the wireless communication system according to the embodiment, for preventing the interference, when detecting lack of a time reference such as desynchronization from the GPS, the scheduler in the base station 10 changes the data allocation so as to restrain the interference. Specifically, the scheduler provides a data non-allocation field at the head of the all-subchannel zone T2. As a result, according to the wireless communication system in the embodiment, supposing that the desynchronization occurs in a certain base station, the phase shift of the radio frame of the base station 10 is allowed owing to the data non-allocation field even in such a case. As a result, it is feasible to obviate the problem that the signals transmitted from the base stations 10 interfere with each other.

### <First Embodiment>

An in-depth description of the wireless communication system in a first embodiment will hereinafter be made with reference to the drawings, using OFDMA as the modulation system, however, a mode of the implementation is not limited to configurations of the embodiments that will hereinafter be described. The modulation system may also be, e.g., the OFDM system.

### (System Architecture)

The wireless communication system in the first embodiment is configured by the base stations 10 and the terminals 20 (see FIG. 1). The base stations 10 are connected via a predetermined network (not shown). The base stations 10 individually configure cells C1, C2, C3. The terminals 20 are disposed in arbitrary locations. The base station 10 connects the terminal 20 to the wireless communication system through wireless communications, and thus provides the predetermined communication service to the connected terminal 20.

### (Configuration of Base Station)

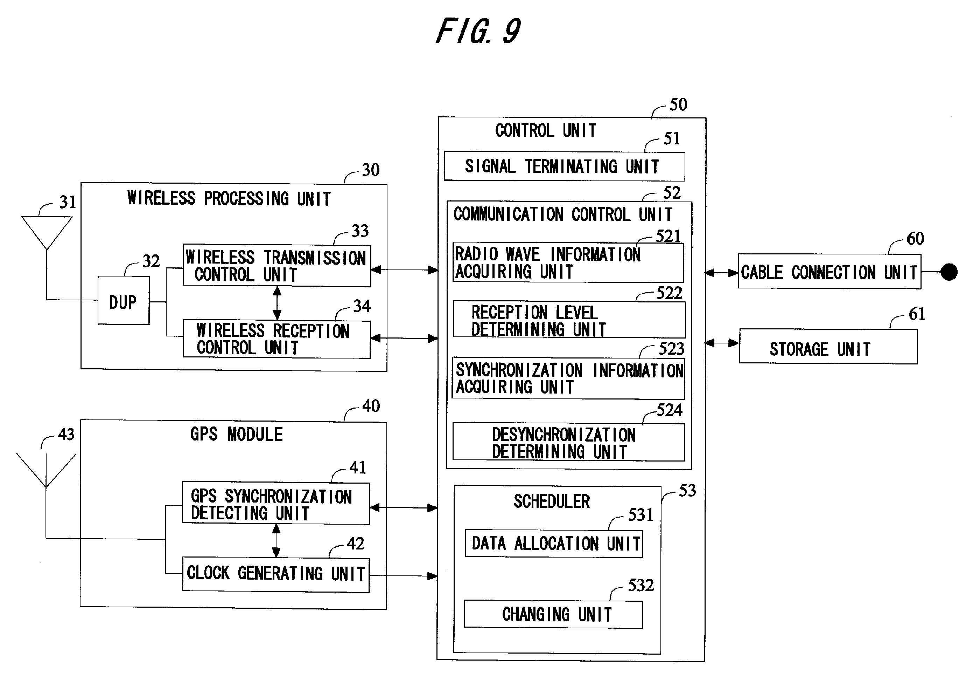

Next, a device configuration of the base station 10 will be explained. FIG. 9 illustrates an outline of the configuration of the base station 10 in the first embodiment. The base station 10 in the first embodiment is configured by a wireless processing unit 30 to which an antenna 31 is connected, a GPS module 40 and a control unit 50. The wireless processing unit 30 comprises a transmission/reception frequency shared device (which will hereinafter be generally termed a DUPlexer (DUP 32)), a wireless transmission control unit 33, and a wireless reception control unit 34. The GPS module 40 includes a GPS synchronization detecting unit 41 and a clock generating unit 42. Further, the control unit 50 includes a signal terminating unit 51, a communication control unit 52 and a scheduler 53. These respective function units of the base station 10 are realized by software components or hardware components or combinations of the software and hardware components (refer to the paragraph <Others>). The individual function units building up the base station 10 will hereinafter be described.

The wireless transmission control unit 33 performs a frequency conversion, amplification, etc of analog signals transmitted from the control unit 50, thereby generating highfrequency signals. The thus-generated signals are transmitted from the antenna 31 via the DUP 32. The DUP 32, in order to share the antenna 31 for transmission and reception, separates the signals into transmission signals and reception signals, then gets the transmission signals transmitted from the antenna 31 and sends the reception signals to the wireless reception control unit 34.

The wireless reception control unit 34 receives the reception signals received by the antenna 31 and transmitted via the DUP 32, then amplifies the reception signals and converts the frequency thereof. The thus-processed reception signals are sent to the control unit 50.

A GPS antenna 43 for receiving radio waves from a GPS satellite is connected to the GPS module 40. The GPS synchronization detecting unit 41 partly building up the GPS module 40 detects the signal from the GPS satellite via the GPS antenna 43. To be specific, the signals received by the GPS antenna 43 contain time information (hour/minute), reference information (e.g., a clock signal of 10 MHz) and timing information (e.g., a 1 pps (pulse per second) signal that is output once per second). The GPS synchronization detecting unit 41 compares the clock signal generated by the clock generating unit 42 with the GPS clock signal received by the GPS antenna 43, thus detecting desynchronization of the GPS. Note that the GPS synchronization detecting unit 41 can be also constructed of a PLL (Phase Locked Loop). Information on the detected synchronization (which will hereinafter be also referred to as synchronization information) is sent to the control unit 50.

The clock generating unit 42 generates the clock signal having a predetermined frequency. The clock generating unit 42 sets a frequency to be generated corresponding to the GPS clock received by the GPS antenna 43. The clock signal generated by the clock generating unit 42 is transmitted to the GPS synchronization detecting unit 41.

### (Control Unit)

Next, the control unit will be explained. The signal terminating unit 51 partly building up the control unit 50 executes a process of terminating a radio signal or a cable signal. Specifically, the signal terminating unit 51 terminates the radio signal sent from the wireless processing unit 30 or a cable signal transmitted from the cable connection unit 60.

### (Communication Control Unit)

The communication control unit 52 executes a predetermined process needed for performing the wireless communications with respect to the signal terminated by the signal terminating unit 51. The communication control unit 52 comprises a radio wave information acquiring unit 521, a reception level determining unit 522, a synchronization information acquiring unit 523 and a desynchronization determining unit 524.

The radio wave information acquiring unit 521 acquires downlink radio wave information about a radio wave state of the downlink transmission data transmitted to the terminal 20. The terminal 20 receiving the downlink transmission data sent via the antenna 31 reports, as a piece of downlink radio wave information, a state of radio waves received by the terminal 20 itself to the base station 10. Accordingly, the radio wave information acquiring unit 521 in the base station 10 acquires the downlink radio wave information that is thus sent from the terminal 20. The acquired downlink radio wave information is transmitted to the reception level determining unit 522.

The reception level determining unit 522 determines, based on the downlink radio wave information, a reception level of the terminal 20. To be specific, the reception level determining unit 522 determines, based on the CINR information contained in the downlink radio wave information, whether the reception level (dBm) of the terminal 20 is higher than the preset threshold value (dBM) or not. This process enables the terminal 20 to determine whether the terminal 20 exists in the region that is hard to undergo the interference from the neighboring cells or in the region that is easy to undergo the interference from the neighboring cells. Accordingly, the threshold value (dBm) may be properly set as such a determination-enabled value. Note that the radio wave information acquiring unit 521 and the reception level determining unit 522 are separately configured in the first embodiment, however, an available scheme is that any one of these units 521, 522 perform the functions of both of the units.

The synchronization information acquiring unit 523 acquires synchronization information. The synchronization information can be acquired via the GPS module 40. In the first embodiment, the synchronization information can involve using the synchronization information based on the GPS signal transmitted from the GPS module 40 but is not limited to this type of synchronization information. It is sufficient that the synchronization information is the information from which the synchronization of the base station 10 can be determined. For example, the base stations 10 can be electrically connected to each other via the cable connection unit 60. Accordingly, a signal for taking the synchronization flows to between these electrically-connected base stations 10 and may be acquired as the synchronization information. The thus-acquired synchronization information is sent to the desynchronization determining unit 524.

The desynchronization determining unit 524 determines, based on the synchronization information, whether the desynchronization occurs in the base station 10 or not. In the first embodiment, the synchronization information contains information on the GPS desynchronization detected by the GPS synchronization detecting unit 41 of the GPS module 40. Hence, the desynchronization determining unit 524 determines, based on the information on the GPS desynchronization, whether the desynchronization occurs in the base station 10 or not. A result of the determination made by the desynchronization determining unit 524 is sent to the scheduler 53. Note that the synchronization information acquiring unit 523 and the desynchronization determining unit 524 are separately configured in the first embodiment, however, an available scheme is that any one of these units 523, 524 perform the functions of both of the units.

Incidentally, the communication control unit 52 can be properly provided with, in addition to the functions described above, a configuration for executing a predetermined process necessary for performing the wireless communications. Specifically, the communication control unit 52 can be provided with a control information generating unit, an encoding (ENCODING) unit, a mapping unit, an Inverse Fast Fourier Transform (which will hereinafter be abbreviated to IFFT) unit, a Fast Fourier Transform (which will hereinafter be abbreviated to FFT) unit, a channel compensating/channel estimating unit, a demapping unit, a decoding (DECODING) unit, a control information acquiring unit, etc.

The control information generating unit receives the downlink control information from another function unit (not shown), receives scheduling information (e.g., UL-MAP information etc) from the scheduler 53, and generates the downlink control data from these items of information. The encoding unit encodes and modulates the control data sent from the control information generating unit on the basis of transmission parameter information transmitted from the scheduler 53. For example, the encoding unit executes a channel encoding process for every subcarrier. Note that the encoding unit similarly executes the process for user data sent from another function unit (not shown). The mapping unit maps each data series transmitted from the encoding unit to each subcarrier in accordance with the mapping information sent from the scheduler 53. The IFFT unit executes an IFFT process of inverse-fast-Fourier-transforming the data series, thereby generating an OFDMA (Orthogonal Frequency Division Multiplexing) signal. The OFDMA signal is transmitted to the wireless transmission control unit 33.

The FFT unit executes an FFT process of fast-Fourier-transforming the signal transmitted from the wireless reception control unit 34, and outputs a predetermined number of frequency domain signals corresponding to the subcarrier components. The channel estimating unit acquires a propagation path characteristic (channel estimation value) with respect to the uplink to the present base station from the sender terminal by use of a pilot symbol in the data series sent from the FFT unit. The channel compensating unit executes a channel compensating process about the serial data series corresponding to the individual subcarrier components transmitted from the FFT unit by use of propagation path characteristic information. The demapping unit demaps the serial data series corresponding to the respective subcarrier components. The decoding unit demodulates and decodes the data series transmitted from the demapping unit by use of the transmission parameter information for the uplink control data transmitted from the scheduler 53, thus acquiring the uplink control information. The control information acquiring unit acquires NACK information and neighboring cell information from the uplink control information. Note that each of these respective configurations is nothing but one example, the wireless communication system in the first embodiment is preferably employed as the wireless communication system that involves using the OFDM system, the OFDMA system and the FFR technique, and hence the configurations required for these techniques can be adequately used.

### (Scheduler)

The scheduler 53, upon detecting the desynchronization of the GPS, changes, as triggered by this detection, the data allocation so as to restrain the interference. To be specific, a data non-allocation is provided between the segmented zone T1 and the all-subchannel zone T2. For actualizing these functions, the scheduler 53 in the first embodiment comprises a data allocation unit 531 and a changing unit 532.

The data allocation unit 531 allocates the transmission data on the basis of the result of the determination made by the reception level determining unit 522. Specifically, the data allocation unit 531, if the reception level of the terminal 20 is equal to or larger than the threshold value, deems that the terminal 20 is the terminal located at the center of the cell, and allocates the transmission data to the all-subchannel zone T2. For instance, in the example illustrated in FIG. 1, the terminal 22 is located in the region C1-2 that is hard to undergo the interference from other cells, and therefore, with respect to the terminal 22, the transmission data is allocated to the all-subchannel zone T2. On the other hand, the data allocation unit 531, if the reception level of the terminal 20 is smaller than the threshold value, deems that the terminal 20 is the terminal located in the vicinity of the cell edge, and allocates the transmission data to the segmented zone T1. For instance, the example illustrated in FIG. 1 illustrates that the terminal 21 is located in the region C1-1 that is easy to undergo the interference from other cells, and therefore, with respect to the terminal 21, the transmission data is allocated to the segmented zone T1.

The changing unit 532 changes, based on the result of the determination by the desynchronization determining unit 524, the data allocation on the downlink subframes structuring the downlink transmission data. To be specific, when the desynchronization determining unit 524 determines that the desynchronization occurs, the changing unit 532 provides a bandwidth-for-user non-allocation region (the data non-allocation region) at the head of the all-subchannel zone T2, in other words, in a 1-slot (2-symbol) area between the segmented zone T1 and the all-subchannel zone T2. With this scheme, even if the deviation occurs between the heads of the downlink frames due to the desynchronization, this deviation allowed in the data non-allocation region, thereby preventing the interference. It should be noted that the data non-allocation region is provided in the area for one slot in the first embodiment, however, the number of the slots is not limited to a specified numerical value. The desynchronization, i.e., the deviation in frequency, can be replaced with the deviation in time, and hence the time making the desynchronization allowable can be elongated by increasing the number of the slots.

Note that the slot is the minimum data unit according to the OFDMA. Therefore, the data non-allocation region is provided also on the slot-by-slot basis. One slot has two dimensions such as the time and the subchannel count. Then, a single data region (which is also referred to as a data burst) is organized by joining a plurality of slots.

If the desynchronization determining unit 524 does not determine that the desynchronization occurs, the changing unit 532 executes nothing particular and terminates the process. Namely, in such a case, only the process of the data allocation unit 531 described above is executed.

### (Structure of Downlink Subframe)

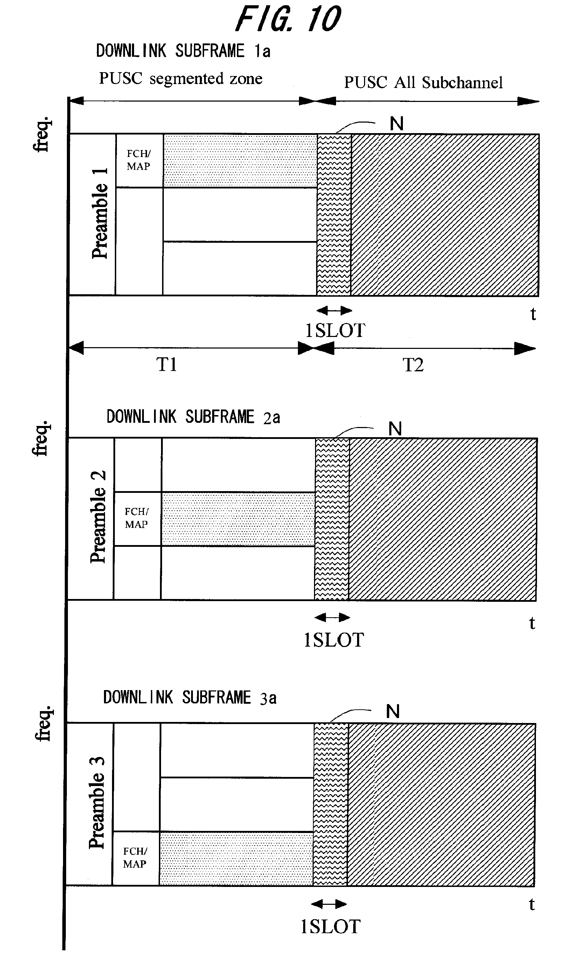

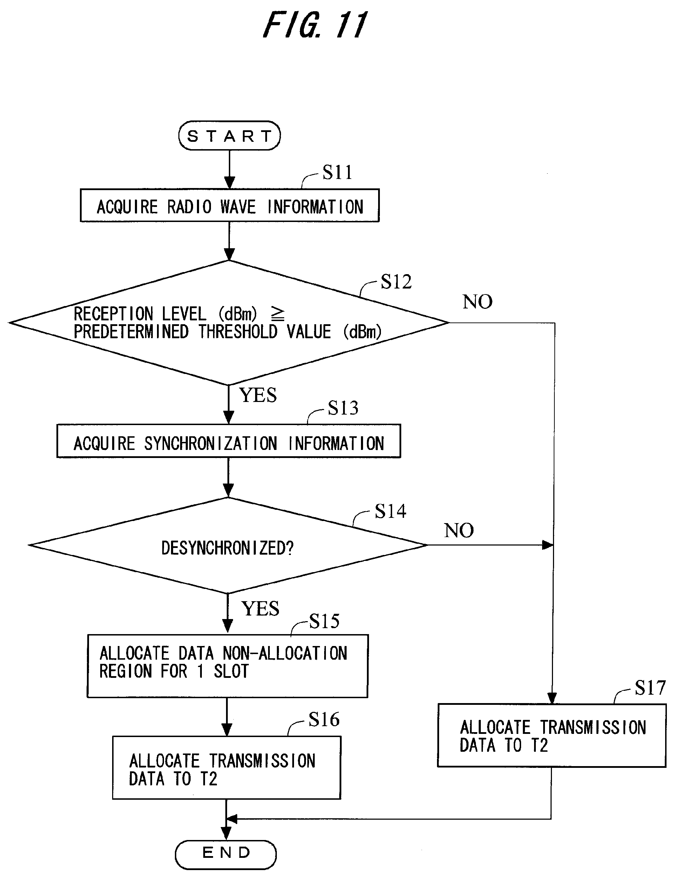

A structure of the downlink subframe will next be explained. FIG. 10 illustrates the structure of the downlink subframe provided with the data non-allocation region. A downlink subframe 1a corresponds to the cell C1 of the base station 11. A downlink subframe 2a corresponds to the cell C2 of the base station 12. A downlink subframe 3a corresponds to the cell C3 of the base station 13. FIG. 11 illustrates only the downlink subframes, however, the frame transmitted from the base station 10 contains the uplink subframe (which is the frame transmitted toward the base station 10 from the terminal 20), the TTG (Tx/Rx Transition Gap) and the RTG (Rx/Tx Transition Gap) for switching transmit/receive regions.

Each of downlink subframes 1a, 2a, 3a is divided into the segmented zone (Segmented zone) T1 as the segmented data zone and the all-subchannel (All Subchannel) zone T2 which is a non-segmented zone but uses all of the subchannels on the time base. In the downlink subframes illustrated in FIG. 11, the cell design employing the FFR technique is realized based on the Frequency Reuse Configuration (FRC) = 1. Incidentally, as described above, according to the OFDMA, the slot is the minimum data unit, and the data is mapped to the data region on the slot-by-slot basis.

Note that PUSC (Partially Used Subchannelization) is used as a permutation type in the first embodiment. The PUSC is one of the permutation types employed for the OFDMA, wherein only some of the usable subchannels are used. Note that the permutation type is not limited to the PUSC. The permutation type may involve using, e.g., FUSC (Fully Used Subchannelization) and AMC (Adaptive Modulation and Coding).

In the first embodiment, a data non-allocation region N for 1 slot is provided at the head of the all-subchannel zone T2, in other words, between the segmented zone T1 and the all-subchannel zone T2. As a result, for instance, even if the deviation occurs at the head of the downlink transmission frame 1a due to the desynchronization, this deviation is allowed in the data non-allocation region N, thereby preventing the interference.

### (Processing Flow)

Next, the discussion will be focused on a data allocation process in the processes executed by the wireless communication system in the first embodiment. FIG. 11 illustrates a flow of the data allocation process. In step S11, the radio wave information acquiring unit 521 acquires downlink radio wave information with respect to a state of radio waves of the downlink transmission data transmitted to the terminal 20. Upon acquiring the radio wave information, the operation proceeds to step S12.

In step S12, the reception level determining unit 522 determines, based on the CINR information contained in the downlink radio wave information, whether the reception level (dBm) of the terminal 20 is higher than the preset threshold value (dBM) or not. If the reception level of the terminal 20 is equal to or larger than the threshold value, the operation proceeds to step S13. Whereas if the reception level of the terminal 20 is smaller than the threshold value, the operation proceeds to step S16.

In step S13, the synchronization information acquiring unit 523 acquires the synchronization information based on the GPS signal via the GPS module 40. When the synchronization information is acquired, the operation proceeds to step S14.

In step S14, the desynchronization determining unit 524 determines, based on the synchronization information, whether the desynchronization occurs in the base station 10 or not. When determining that the desynchronization occurs, the operation proceeds to step S15. While on the other hand, when determining that the desynchronization does not occur, the operation proceeds to step S16.

In step S15, the changing unit 532 provides a bandwidth-for-user non-allocation region (the data non-allocation region) in the anteriority to the all-subchannel zone T2, in other words, in the 1-slot (2-symbol) area between the segmented zone T1 and the all-subchannel zone T2. When the setting of the data non-allocation region is finished, the operation proceeds to step S16.

In step S16, the data allocation unit 531 allocates the transmission data to the all-subchannel zone T2. Namely, it is determined in step S12 that the reception level of the terminal 20 is equal to or larger than the threshold value, the terminal 20 is determined to be the terminal that is hard to undergo the interference from other cells, and the transmission data is allocated to the all-subchannel zone T2. Upon finishing the allocation of the transmission data to the all-subchannel zone T2, the data allocation process is terminated.

In step S17, the data allocation unit 531, if the reception level of the terminal 20 is smaller than the threshold value, deems that the terminal 20 is the terminal located in the vicinity of the cell edge, and the transmission data is allocated to the segmented zone T1. When finishing the allocation of the transmission data to the segmented zone T1, the data allocation process is terminated.

### (Operational Effect)

According to the wireless communication system in the first embodiment discussed above, the data allocation on the downlink subframes structuring the downlink transmission data can be changed based on the result of the determination made by the desynchronization determining unit 524. Namely, when the desynchronization determining unit 524 determines that the desynchronization occurs, the changing unit 532 provides the bandwidth-for-user non-allocation region (the data non-allocation region) in the 1-slot (2-symbol) area between the segmented zone T1 and the all-subchannel zone T2. With this scheme, even if the deviation occurs between the heads of the downlink transmission frames due to the desynchronization, this deviation is allowed in the data non-allocation region, thereby preventing the interference.

For example, according to the FFR technique, the standards of IEEE802.16e specify that the base stations 10 synchronize at the level of the 1/8 CP (Cyclic Prefix). This 1/8 CP, if estimated into time, becomes approximately 1.42 usec (micro sec). Accordingly, if the desynchronization occurs, only the deviation equivalent to 1.42 usec could be allowed. By contrast, the wireless communication system in the first embodiment can allow a deviation equivalent to 1 slot, i.e., up to approximately 206 usec (in which the calculation is made on the assumption that 1 slot = 2 symbols each equivalent to 103 usec). As a result, for example, in the case of providing the data non-allocation region in the 1-slot area, if a period of GPS signal reception-disabled time is on the order of 3 hours, the interference can be prevented during this period of time. Namely, an outage probability, such as a stop of the transmission, of the wireless communication system is reduced by remarkably elongating the time till the interference is caused, and reliability of the wireless communication system can be improved.

### <Second Embodiment>

The wireless communication system in a second embodiment has, in addition to the functions of the wireless communication system in the first embodiment, a function of decreasing the transmission power of a predetermined region when the GPS desynchronization is detected.

An MBS (Multicast Broadcast Service) region as a region for transmitting common data simultaneously to the base stations 10 in order to obtain a diversity gain, can be allocated to the all-subchannel zone T2. The common data transmitted simultaneously to the base stations 10 is allocated to the MBS region, and the acquisition of the diversity gain entails synchronizing the base stations 10 with each other. Note that the MBS region is allocated to the all-subchannel zone T2, and it is difficult to consider, if the synchronous status is established, that the transmission data allocated to the MBS regions interfere with each other. If the desynchronization occurs in a certain base station and simultaneously if the terminal 20 moves and approaches the base station in the desynchronization, the moving terminal 20 can receive the data in the MBS region of the base station in the desynchronization. As a result, a matter of concern is that the data allocated to the MBS regions interfere with each other. Such being the case, a scheme of the wireless communication system according to the second embodiment is that when the desynchronization of the GPS is detected, the transmission power of the MBS region of the base station 10 of which the desynchronization is detected is reduced.

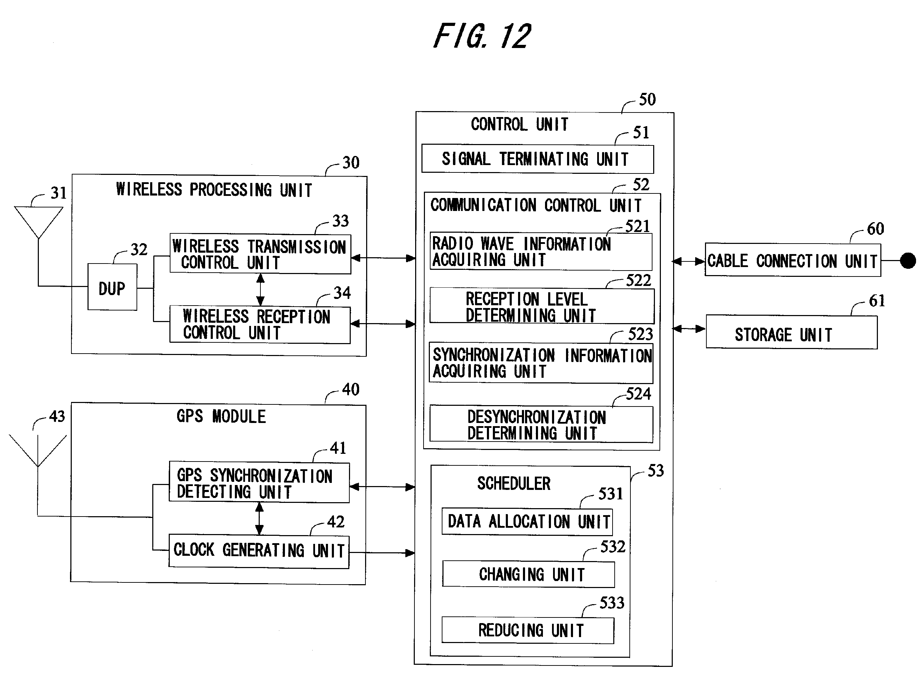

Herein, FIG. 12 illustrates an outline of the configuration of the base station in the second embodiment. Incidentally, the device components as those of the base station 10 in the wireless communication system in the first embodiment are marked with the same numerals and symbols, and their explanations are omitted.

The base station 10 in the wireless communication system in the second embodiment is provided with, in addition to the components of the base station 10 in the first embodiment, a reducing unit 533 in the scheduler 53. The reducing unit 533, when determining that the desynchronization occurs, reduces the transmission power of the MBS region in the downlink subframe of the base station in the desynchronization. A value of the reduction is not limited, however, it is preferable that the value of the reduction is adjusted corresponding to the reception level of the terminal. Namely, if it is predicted based on the reception level of the terminal that the terminal keeps approaching, the interference can be prevented by reducing the transmission power to a greater degree. Note that the individual function units of the base station 10 in the second embodiment are realized by software components or hardware components or combinations of the software and hardware components (refer to the paragraph

### <Others>).

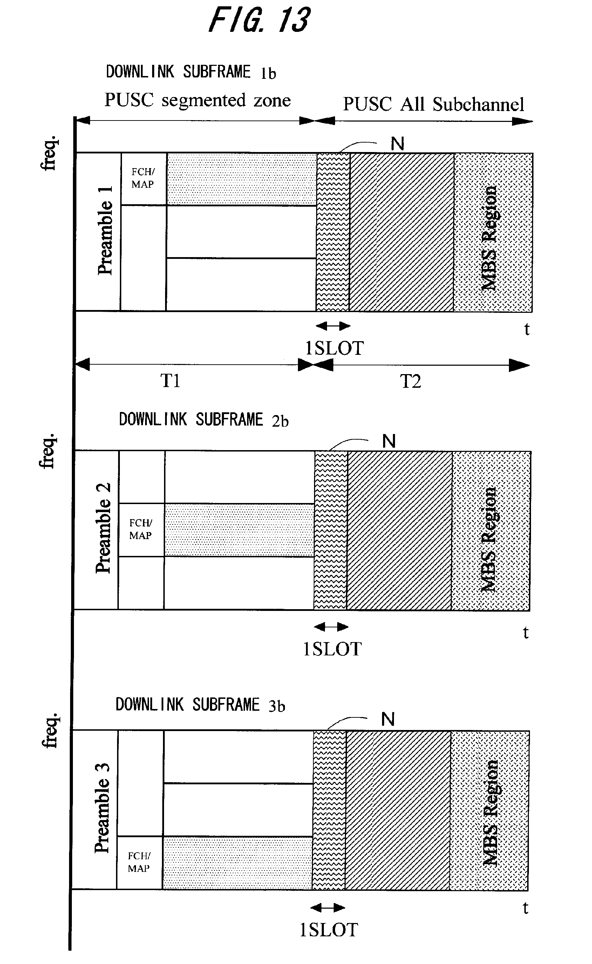

FIG. 13 illustrates a structure of the downlink subframe in which the MBS region is allocated. A downlink subframe 1b corresponds to the cell C1 (see FIG. 1 about how the cells are disposed) of the base station 11. A downlink subframe 2b corresponds to the cell C2 of the base station 12. A downlink subframe 3b corresponds to the cell C3 of the base station 13. FIG. 13 illustrates only the downlink subframes, however, the frame transmitted from the base station 10 contains the uplink subframe and the TTG, RTG for switching the transmit/receive regions.

As illustrated in FIG. 13, in the downlink subframe in the second embodiment, the MBS region is allocated to the all-subchannel zone. Incidentally, the descriptions of the same components of the downlink subframe as those in the first embodiment are omitted.

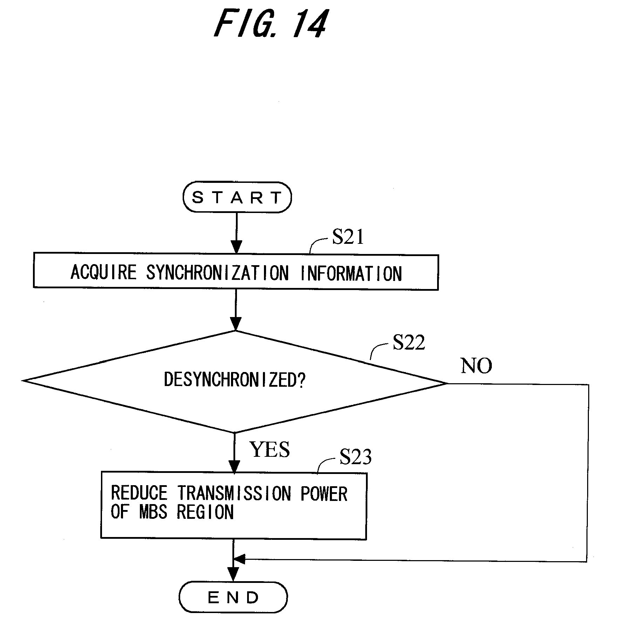

Next, the discussion will be focused on the data allocation process in the processes executed by the wireless communication system in the second embodiment. FIG. 14 illustrates a flow of the data allocation process in the wireless communication system according to the second embodiment. Note that the wireless communication system in the second embodiment is to execute processes, which will hereinafter be explained, in addition to the data allocation process described in the wireless communication system in the first embodiment.

In step S21, the synchronization information acquiring unit 523 acquires the synchronization information based on the GPS signal via the GPS module 40. When the synchronization information is acquired, the operation proceeds to step S22.

In step S224, the desynchronization determining unit 524 determines, based on the synchronization information, whether the desynchronization occurs in the base station 10 or not. When determining that the desynchronization occurs, the operation proceeds to step S23. While on the other hand, when determining that the desynchronization does not occur, the process is terminated.

In step S23, the reducing unit 533 reduces the transmission power of the MBS region of the base station undergoing, it is determined, the occurrence of the desynchronization. Upon completion of reducing the transmission power of the MBS region, the process comes to an end.

The wireless communication system in the second embodiment described above enables, in addition to the effect of the wireless communication system in the first embodiment, the adjustment of the transmission power of the MBS region on the downlink subframes structuring the downlink transmission data on the basis of the result of the determination made by the desynchronization determining unit 524. Namely, when the desynchronization determining unit 524 determines that the desynchronization occurs, the reducing unit 533 reduces the transmission power of the MBS region on the subframes of the base station 10 undergoing the occurrence of the desynchronization. With this scheme, if the desynchronization occurs, it is feasible to restrain the transmission data allocated to the MBS regions from interfering with each other.

### <Other Embodiments>

In the discussion given above, the wireless communication system in the second embodiment has been exemplified as the system including the reducing unit 533 in addition to the components of the wireless communication system in the first embodiment. Namely, in the wireless communication system according to the second embodiment, the control unit 50 includes both of the data allocation changing unit 532 and the reducing unit 533. The wireless communication system in the embodiment is not limited to this configuration. The wireless communication system in the embodiment may take a configuration including only the reducing unit 533. Further, the discussion on the second embodiment has exemplified the OFDMA system using the FFR technique, however, the systems, if provided with the MBS region on the downlink subframe, can be properly employed. Accordingly, the wireless communication system can also be used for a transmission system that does not employ the FFR technique.

### <Others>

### (Concerning Hardware Components and Software Components)

The hardware components connote hardware circuits exemplified such as a field programmable gateway (FPGA), a specific application oriented integrated circuit (Application Specific Integrated Circuit: ASIC), a gate array, a combination of logic gates, a signal processing circuit and an analog circuit. The software components represent parts (segments) for realizing the software functions but do not embrace a concept that restricts languages, environments for developments, etc for realizing the software. The software components are exemplified such as a task, a process, a thread, a driver, firmware, a database, a table, functions, a procedure, a subroutine, a predetermined module of program codes, a data structure, an array, variables and parameters. These software components are realized on one or a plurality of memories (one or a plurality of processors (e.g., CPUs (Central Processing Units), DSPs (Digital Signal Processors), etc). References in the above description to "GPS" are intended to embrace any form of space- or land-based positioning system whether or not employing signals from GPS satellites, or any other means of providing an absolute time reference.

It is to be noted that the respective embodiments described above do not restrict the method of actualizing the function units, and hence the function units may be constructed of the hardware components or the software components or the combinations thereof by the method realizable to ordinary engineers in the present technical field.

## Claims

1. A base station for performing wireless communications with terminals, comprising:
a scheduler configured to schedule data transmitted to said terminal;
a desynchronization determining unit configured to acquire synchronization information on synchronization between said base station and a neighboring base station to the base station and determining, based on the synchronization information acquired, whether said base station is in desynchronization or not; and
a changing unit configured to change, when said desynchronization determining unit determines that said base station is in desynchronization, the scheduling by said scheduler so as to restrain radio waves transmitted from said base station and radio waves transmitted from said neighboring base station from interfering with each other.

2. A base station according to claim 1, the base station comprising a reception level determining unit configured to acquire radio wave information with respect to a state of radio waves of the wireless communications, and to determine, based on the radio wave information acquired, a reception level of said terminal,
wherein a subframe for transmitting data to said terminal is divided, on a time base, into a segmented zone as a segmented region and an all-subchannel zone as a data region using all subchannels without being segmented, said scheduler is arranged to allocate data on the subframe on the basis of a result of the determination by said reception level determining unit, and said changing unit is responsive, to said desynchronization determining unit determining that said base station is in desynchronization, to allocate a region having no data for at least one slot in anteriority to the all-subchannel zone.

3. A base station according to claim 1 or 2, wherein said scheduler allocates the data transmitted to said terminal to the all-subchannel zone if the reception level of said terminal is equal to or larger than a predetermined threshold value, and allocates the data transmitted to said terminal to the segmented zone if the reception level of said terminal is smaller than the predetermined threshold value.

4. A base station according to claim 1, 2, or 3, wherein a subframe for transmitting data to said terminal comprises a common data region for transmitting common data to said terminal and to another terminal different from said terminal, and said changing unit, when said desynchronization determining unit determines that said base station is in desynchronization, reduces transmission power of the common data region in a subframe for transmitting data from the base station in the desynchronization.

5. A base station according to claim 4, wherein said changing unit, when said desynchronization determining unit determines that said base station is in desynchronization, reduces transmission power of the common data region in a subframe for transmitting data from the base station in the desynchronization, corresponding to the reception level determined by said reception level determining unit.

6. A scheduling method of a base station performing wireless communications with terminals, comprising the steps of:
scheduling data transmitted to said terminal;
acquiring synchronization information on synchronization between said base station and a neighboring base station to the base station and determining, based on the synchronization information acquired, whether said base station is in desynchronization or not; and
changing, when it is determined in said desynchronization determining step that said base station is in desynchronization, the scheduling in said scheduling step so as to restrain radio waves transmitted from said base station and radio waves transmitted from said neighboring base station from interfering with each other.

7. A scheduling method according to claim 6, wherein said base station further comprising a reception level determining step of acquiring radio wave information with respect to a state of radio waves of the wireless communications, and determining, based on the radio wave information acquired , a reception level of said terminal,
wherein a subframe for transmitting data to said terminal is divided, on a time base, into a segmented zone as a segmented region and an all-subchannel zone as a data region using all subchannels without being segmented, said scheduling step includes allocating data on the subframe on the basis of a result of the determination in said reception level determining step, and said changing step includes, when it is determined in said desynchronization determining step that said base station is in desynchronization, allocating a region having no data for at least one slot in anteriority to the all-subchannel zone.

8. A scheduling method according to claim 7, wherein said scheduling step includes allocating the data transmitted to said terminal to the all-subchannel zone if the reception level of said terminal is equal to or larger than a predetermined threshold value, and allocating the data transmitted to said terminal to the segmented zone if the reception level of said terminal is smaller than the predetermined threshold value.

9. A scheduling method according to claim 6, 7, or 8,
wherein a subframe for transmitting data to said terminal comprises a common data region for transmitting common data to said terminal and to another terminal different from said terminal, and said changing step includes, when it is determined in said desynchronization determining step that said base station is in desynchronization, reducing transmission power of the common data region in a subframe for transmitting data from the base station in the desynchronization.

10. A scheduling method according to claim 9, wherein said changing step includes, when it is determined in said desynchronization determining step that said base station is in desynchronization, reducing transmission power of the common data region in a subframe for transmitting data from the base station in the desynchronization, corresponding to the reception level determined in said reception level determining step.

11. Software which, when executed by a base station of a wireless communication system, causes the base station to perform the method of any of claims 6 to 10.

12. A computer-readable medium on which is recorded the software according to claim 11.
